# EUROPÄISCHE PATENTSCHRIFT

(11) **EP 1 568 883 B1**
(45) Veröffentlichungstag und Bekanntmachung des Hinweises auf die Patenterteilung: **02.11.2011**
(21) Anmeldenummer: 05004279.5
(22) Anmeldetag: 28.02.2005
(51) Int. Cl.: F03D 11/00, H02G 13/00, H01R 39/64

(54) **Blitzschutzeinrichtung für Windenergieanlagen**
Lightning protection system for wind turbines
Système de protection contre la foudre pour aérogénérateurs

(30) Priorität: 27.02.2004 DE 102004010104; 04.05.2004 DE 102004022299
(43) Veröffentlichungstag der Anmeldung: 31.08.2005
(73) Patentinhaber: REpower Systems AG, 22335 Hamburg (DE); Stemmann-Technik GmbH, 48465 Schüttorf (DE)
(72) Erfinder: Letas, Heinz-Hermann, 23701 Süsel (DE); Limbeck, Volker, 26670 Uplengen (DE); Scheibe, Klaus, 24111 Kiel (DE); Lehmann, Eberhard, 24103 Kiel (DE); Wilmes, Thomas, 49090 Osnabrük (DE); Venker, Michael, 48465 Schüttorf (DE)
(74) Vertreter: Glawe, Delfs, Moll

(56) Entgegenhaltungen:
- EP-A- 0 718 495
- EP-A- 1 154 537
- WO-A1-2004/044419
- DE-A1- 4 005 685
- FR-A- 2 751 709
- GB-A- 2 052 006
- US-A- 377 742
- US-A- 4 281 328
- US-A- 4 350 895

## Beschreibung

Die Erfindung betrifft eine Windenergieanlage mit einem Turm zur Befestigung in einem Untergrund und einer darauf angeordneten Gondel, an der ein Rotor mit einer Nabe und mehreren Rotorblättern drehbar angeordnet ist und einen in der Gondel angeordneten Generator antreibt, wobei eine Blitzableitanlage zur Ableitung elektrischer Energie eines eingeschlagenen Blitzes in den Untergrund vorgesehen ist, deren Blitzpfad von den Rotorblättern und die Nabe zum Turm führt und mindestens einen Blitzübertrager zur Überleitung zwischen zwei relativ zueinander beweglichen Komponenten der Windenergieanlage vorgesehen ist.

Windenergieanlagen sind üblicherweise als hoch aufragende Strukturen ausgeführt, um von mit der Höhe ansteigenden Windgeschwindigkeiten zu profitieren. Lagen mit hohen Windgeschwindigkeiten, die sich für die Aufstellung von Windenergieanlagen besonders anbieten, liegen häufig exponiert. Beides führt dazu, dass Windenergieanlagen einem hohen Blitzschlagrisiko ausgesetzt sind. Insbesondere bei in Gewässern angeordneten Windenergieanlagen, sogenannte Offshore-Anlagen, besteht auf Grund der exponierten Lage der Windenergieanlage ein beträchtliches Blitzschlagrisiko. Gefährdet sind hierbei insbesondere die Rotorblätter, von denen die elektrische Energie des Blitzes über die Nabe, die Gondel und den Turm in den Untergrund abgeleitet werden muss. Schwierigkeiten ergeben sich daraus, dass sowohl die Rotorblätter gegenüber der Rotornabe, der Rotor gegenüber der Gondel wie auch die Gondel gegenüber dem Turm drehbar angeordnet sind. Zur Ableitung der Blitzenergie sind Übergangseinrichtungen erforderlich, die eine Drehbewegung zulassen und dennoch eine ausreichende Überleitung der elektrischen Energie eines Blitzes gewährleisten. Die Übergangseinrichtungen müssen dazu so beschaffen sein, dass sie auch bei den durch Blitzschlag verursachten hohen Spannungen von einigen Millionen Volt und Stromstärken bis an die Hunderttausend Ampere ableiten können, ohne dass Schäden an Komponenten der Windenergieanlage auftreten.

Um eine sichere Überleitung des Blitzes an besonders kritischen Übergangsstellen zu ermöglichen, sind verschiedene Konstruktionen im Stand der Technik bekannt geworden. Eine erste Konstruktion besteht darin, bewegliche Kabelverbindungen vorzusehen. Sie hat den Vorteil, dass auf einfache Weise eine sichere Verbindung hergestellt werden kann. Nachteile liegen darin, dass mit einer solchen Kabelverbindung keine vollständige Drehbarkeit erreicht werden kann. Nach einer bestimmten Umdrehungsanzahl muss die Kabelverbindung wieder entwirrt werden. Weitere Nachteile liegen darin, dass die zur Erreichung einer ausreichenden Verdrehbarkeit erforderliche große Länge zu einem beträchtlichen Spannungsabfall führen kann. Auf Grund der Länge besteht weiterhin den Nachteil, dass unter der Einwirkung hoher Blitzströme Induktionskräfte auftreten, so dass sich die Kabel peitschenartig bewegen. Weiter ist es bekannt, Bürstenkontakte als Übertrager vorzusehen. Eine solche Einrichtung ist in der EP-A-1 154 537 offenbart. Sie bieten den Vorteil eines niederohmigen Kontakts. Nachteilig daran ist, dass sie zur sicheren Übertragung der Blitzenergie große Abmessungen benötigt. Weiter hat sie den Nachteil, dass insbesondere bei groß dimensionierten Windenergieanlagen eine hohe Laufleistung zu bewältigen hat. Der Verschleiß ist beträchtlich, es entsteht leitfähiger Abrieb.

In der DE-C-4 436 197 ist eine Windenergieanlage mit einer Blitzschutzeinrichtung beschrieben. Es ist eine Blitzüberleitung von Rotorblättern zu einem feststehenden elektrisch leitenden Bauteil eines geerdeten Maschinenträgers vorgesehen. Die Blitzschutzüberleitung ist als ein im Bereich einer Rotorblattwurzel in einem Isolations-Abstand zur Rotornabe angeordnetes, mit der Rotorblattwurzel in elektrischer Wirkverbindung stehender Blitzübertrager ausgebildet. Er weist einen Überleitungsvorsprung auf, der dem feststehenden, elektrisch leitenden Bauteil des Maschinenträgers bis auf einen vorbestimmten Abstand angenähert ist. Bei dieser Blitzschutzeinrichtung sind zwei Funkenstrecken vorgesehen. Die erste Funkenstrecke befindet sich zwischen einem Aluminiumring an der Rotorblattwurzel und einer Fangstange. Am anderen Ende der Fangstange befindet sich eine zweite Funkenstrecke zur Überleitung des Blitzes in einen Ableitring, der koaxial zur Rotorwelle an der Gondel angeordnet ist. Sowohl Blitzeinschläge als auch elektrostatische Ladungen werden über diese beiden Funkenstrecken abgeleitet, so dass mit häufigen Überschlägen zu rechnen ist.

Eine Weiterentwicklung dieser Blitzschutzeinrichtung ist in der DE-C-100 22 128 beschrieben. Danach ist zusätzlich eine Vorrichtung zur kontinuierlichen elektrostatischen Entladung von wenigstens einem Rotorblatt vorgesehen. Bekanntlich kann durch Luftreibung der rotierenden Rotorblätter eine elektrostatische Aufladung eines Rotorblatts entstehen. Die Aufladung erfolgt so lange, bis an einer zur Erde führenden Luftstrecke die Überschlagspannung erreicht wird. Durch die bei rotierenden Rotorblättern andauernde Aufladung kommt es regelmäßig zu Überschlägen an der Funkenstrecke mit ebenso regelmäßigen unerwünschten Störungen der Elektronik. Es wird daher ein Statikableiter verwendet, der aus einer einfachen elektrischen Impedanz mit einer ohmschen oder induktiven Komponente besteht. Es wird vorgeschlagen, im Bereich der Rotorblattwurzel auf Höhe einer Rotorblattwurzel sowie eines Aluminiumrings eine Fangstange als Blitzableitungsorgan anzuordnen, die über einen Überleitungsvorsprung einem elektrisch leitenden Ableitring bis auf einen vorbestimmten Abstand von z.B. 3 mm angenähert ist. Zwischen dem Aluminiumring und dem Blattadapter ist der Statikableiter leitend angeordnet. Diese Kombination einer Vorrichtung zur kontinuierlichen Entladung elektrostatischer Ladung mit einer Funkenstrecke erfordert aufgrund der verwendeten Fangstange relativ viel Bauraum, da der Durchmesser des Ableitrings je nach Größe der Windenergieanlage erheblich sein kann. Die Fangstange muss hinreichend biegesteif ausgeführt sein, damit ein vorbestimmter Abstand zu dem Ableitring eingehalten werden kann. Mit zunehmender Länge der Fangstange ist es schwierig, die Abstände exakt einzuhalten, ohne die Fangstange zusätzlich abzustützen oder steifer zu gestalten. Auch bei der weiterentwickelten Blitzschutzeinrichtung erfolgt die Ableitung des Blitzes als auch der elektrostatischen Ladungen grundsätzlich über eine gemeinsame Funkenstrecke zwischen dem Überleitungsvorsprung und dem elektrisch leitenden Ableitring. Die Vorrichtung zur kontinuierlichen Entladung elektrostatischer Ladungen ist lediglich zwischen der Rotorblattwurzel und der Fangstange wirksam.

Nachteilig an Funkenstrecken ist, dass es bei der Ausbildung des Funkens zu einer schlagartigen Entladung kommt, wodurch elektromagnetische Störungen hervorgerufen werden. Außerdem muss der Luftspalt auf Grund der Abmessungen und des Gewichts der Komponenten der Windenergieanlagen verhältnismäßig groß sein, so dass Überschlagsspannungen im Bereich von über 10 kV sich ergeben. Die zu schützenden Komponenten müssen mindestens so robust aufgebaut sein, dass sie diese Überschlagsspannung vertragen können.

Die US-A 377,742 beschreibt eine Blitzableitanlage für eine Windenergieanlage mit einer Abrollbahn und einer darauf ablaufenden Kontaktrolle. Aus der DIN IEC/117/CD (VDE 0127 Teil 24) sind Maßnahmen zum Schutz von Lagern und Getrieben bei Windenergieanlagen bekannt. Lichtbögen zwischen Lagerlaufflächen und den Wälzkörpern können genügend Energie führen, um starken Lochfraß zu verursachen. Insbesondere bei Offshore-Windenergieanlagen können durch Blitzschlag verursachte Lagerschäden hohe Instandsetzungskosten verursachen. Bei Hauptwellenlagern, Getrieben und Generatorlagern ist es schwierig, die Notwendige Schmierung zur Verminderung der Reibung und den zur Führung von Blitzströmen notwendigen guten metallischen Kontakt gleichermaßen zu erreichen. Es ist bekannt, den Anteil der durch das Hauptwellenlager fließenden Blitzströme durch alternative Strompfade (Blitzpfade) aus Schleifkontakten, Bürsten oder Funkenstrecken zu verringern. Große Lager besitzen niedrige Impedanzen, während Schleifkontakt, Bürsten- oder Funkenstrecken mit ihren Verbindungen gegen Erde höhere Impedanzen aufweisen. Aus diesem Grund können derartige Maßnahmen Blitzströme nicht vollständig von Lagern fernhalten. Ableitungsbauteile wie Kohlebürsten sind in der Regel für kleinere Ströme ausgelegt.

Mit zunehmender Größe der Windenergieanlage ergeben sich dabei zusätzliche Probleme. Die Komponenten größerer Windenergieanlagen weisen größere Abmessungen auf. Die dabei unvermeidlich auftretenden Toleranzen steigen absolut gesehen dabei mit an. Dies bringt es mit sich, dass der zur Beibehaltung eines guten Blitzschutzes erforderliche Aufwand mit zunehmender Größe der Windenergieanlage stark ansteigt. Sowohl die Herstellung wie auch die Instandhaltung der Blitzschutzanlage wird aufwendiger, die Gefahr einer Verringerung der Wirksamkeit des Blitzschutzes steigt.

Der Erfindung liegt die Aufgabe zugrunde, einen Übertrager zu schaffen, der insbesondere bei größeren Windenergieanlagen die oben genannten Nachteile vermeidet.

Die erfindungsgemäße Lösung liegt in den Merkmalen des Anspruchs 1. Vorteilhafte Weiterbildungen sind Gegenstand der Unteransprüche.

Bei einer Windenergieanlage mit einem Turm zur Befestigung in einem Untergrund und einer darauf angeordneten Gondel, an der ein Rotor mit einer Nabe und mehreren Rotorblättern drehbar angeordnet ist und einen in der Gondel angeordneten Generator antreibt, wobei eine Blitzableitanlage zur Ableitung elektrischer Energie eines eingeschlagenen Blitzes in den Untergrund vorgesehen ist, deren Blitzpfad von den Rotorblättern und die Nabe über die Gondel zum Turm führt und mindestens einen Blitzübertrager zur Überleitung zwischen zwei relativ zueinander beweglichen Komponenten der Windenergieanlage aufweist, ist erfindungsgemäß an einer Seite des Blitzübertragers eine Abrollbahn, die mit dem Blitzpfad verbunden ist, und an der anderen Seite des Blitzübertragers eine darauf ablaufende Kontaktrolle vorgesehen, die mit einem Schleifkörper elektrisch leitend verbunden ist, welcher in elektrisch leitender Berührung mit einer Erdungsbürste steht, die vor Umwelteinflüssen gekapselt und über einen Bürstenhalter mit einer Erdungsleitung verbunden ist.

Die Erfindung beruht auf der Erkenntnis, dass mittels der Kontaktrolle, die auf der Abrollbahn läuft, ein sicherer Kontakt zur Überleitung von elektrischen Ladungen auch bei großen Toleranzabweichungen und bei großen zu erbringenden Laufleistungen ermöglicht ist. Dies gilt sowohl bei stillstehender als auch bei drehender Kontaktrolle. Die Kontaktrolle läuft auf der Abrollbahn reibungsarm ab, so dass kein oder kein nennenswerter Verschleiß auftritt. Durch die gekapselte Anordnung der Erdungsbürste wird eine hinreichend niederohmige Verbindung geschaffen, die einen vor Umwelteinflüssen geschützten Pfad zur Ableitung elektrischer Ladungen von der Windenergieanlage ermöglicht. Dank der Kapselung wird die elektrische Leitfähigkeit nicht durch negative Witterungseinflüsse nachteilig beeinflusst. Damit kann ein Aufbau von schädlicher elektrischer Ladung sowohl bei stillstehender wie auch bei laufender Windenergieanlage wirksam verhindert werden. Damit brauchen die zu schützenden elektrischen Bauteile der Windenergieanlage auch keine erhöhte Spannungsfestigkeit aufzuweisen. Durch die erfindungsgemäße Gestaltung ist es weiter ermöglicht, eine sichere Verbindung auch bei hohen Laufleistungen zu gewährleisten. Während herkömmlicherweise bei einem Schleifübertrager, der bspw. zwischen Maschinenträger und Rotornabe angeordnet ist, der zurückgelegte Weg an den Kontaktflächen hoch ist, kann durch die erfindungsgemäße Gestaltung je nach Wahl der Durchmesserverhältnisse zwischen dem Mantel der Kontaktrolle und der Kontaktstelle der Erdungsbürste eine Reduktion der Relativbewegung zwischen Schleifkörper (Kontaktrolle) und Erdungsbürste erreicht werden. Sie kann auf ein Minimum reduziert werden, wenn die Drehachse des Schleifkörpers bzw. Kontaktrolle zusammenfällt und die Erdungsbürste sehr nah oder auf dieser Drehachse angeordnet ist. Bei dieser Anordnung findet eine Relativbewegung in einem kleinen, sehr begrenzten Durchmesserbereich statt, der bei zentrischer Anordnung der Erdungsbürste sogar nur von dem Durchmesser der Erdungsbürste selbst abhängt. Durch den grundsätzlich kleinen Durchmesser der Erdungsbürste ist der Verschleiß gering und liegt zumindest innerhalb gewünschter Wartungsintervalle der Windenergieanlage. Außerdem läuft die Kontaktrolle auf der Abrollbahn reibungsarm ab, so dass auch an dieser Stelle kein oder kein nennenswerter Verschleiß auftritt. Insgesamt ist damit der im Bereich des Blitzübertragers entstehende Verschleiß sowie der sich damit bildende Abrieb in erheblicher Weise verringert. Das ist insbesondere für Offshore-Windenergieanlagen von Bedeutung, da hier besonders lange Wartungsintervalle angestrebt werden.

### Nachfolgend seien einige verwendete Begriffe erläutert:

Unter einer Gondel wird ein Gehäuse verstanden, in dem auf dem Turm angeordnete Komponenten der Windenergieanlage untergebracht sind. Dies sind außer dem Generator üblicherweise ein Getriebe, eine Antriebswelle, eine Steuerungseinrichtung und Träger für die genannten Komponenten.

Unter einer Blitzableitanlage wird eine Einrichtung verstanden, die aus mehreren Elementen besteht, welche eine zu schützende Komponente der Windenergieanlage im Falle eines Blitzschlages elektrisch leitend mit dem Untergrund verbindet.

Unter einer Erdungsleitung wird eine elektrische Verbindung verstanden, die einen Kontakt mit der Erde, beispielsweise über einen Tiefenerder, herstellt.

Unter dem Untergrund wird Land- oder Seeboden verstanden.

Zweckmäßigerweise weist der Blitzübertrager eine mit einer Erdungsleitung verbundene Funkenstrecke auf, die auf die Abrollbahn oder auf eine parallel zu der Abrollbahn verlaufende Kontaktbahn oder auf die Kontaktrolle gerichtet ist. Es können auch mehrere solche Funkenstrecken vorgesehen sein. Die Funkenstrecke ist zum Ableiten von Blitzströmen vorgesehen und ist zweckmäßigerweise parallel zu der Kontaktrolle geschaltet. Eine Parallelschaltung ist in den beiden erstgenannten Fällen gegeben, nämlich wenn die Funkenstrecke auf die Abrollbahn oder eine parallel zu der Abrollbahn verlaufende Kontaktbahn gerichtet ist. Diese Ausgestaltung bietet den Vorteil, dass elektrostatische Ladungen niedrigerer Spannung über das Erdungsbürstensystem abgeleitet werden, während Blitze mit ihren hohen Spannungen über die parallel geschaltete hochohmige Ableitung der Funkenstrecke gleitet werden. Wenn die Funkenstrecke nicht auf die Abrollbahn oder die Kontaktbahn gerichtet ist, sondern auf die Kontaktrolle, liegt eine Reihenschaltung vor, so dass der Blitzstrom durch die Kontaktrolle fließt. Dann ist die Funkenstrecke vorzugsweise räumlich derart positioniert, dass der Blitzstrom nicht durch Lager der Kontaktrolle fließen kann, sondern zuvor über die Funkenstrecke abgeleitet wird. Auf diese Weise sind nicht nur die Lager der Kontaktrolle geschützt, sondern auch die Erdungsbürste. Es versteht sich, dass mehrere Funkenstrecken auch in einer Kombination von Reihen- und Parallelschaltung angeordnet sein können.

Es ist zweckmäßig, wenn die Kontaktrolle einen die Abrollbahn kontaktierenden Abrollbereich und einen Gegenkontaktbereich für die Funkenstrecke aufweist. Mit einer Trennung des Abrollbereichs von dem Gegenkontaktbereich wird erreicht, dass die Funkenstrecke eine Luftstrecke aufweist, die auch bei fortschreitendem Verschleiß des Abrollbereich konstant bleibt. Grundsätzlich ist es damit ermöglicht, die Luftstrecke bei dieser Anordnung kleiner als 1 mm auszuführen. Damit wird das zur Zündung der Luftstrecke erforderliche Spannungsfeld auf ein gewünscht niedriges Maß reduziert.

Die Erdungsbürste ist vorzugsweise so ausgeführt, dass ein ohmscher Kontakt mit der Kontaktrolle hergestellt ist. Jedoch sollte der Widerstand nicht zu niedrig sein. Gegebenenfalls kann mittels eines Vorwiderstands für die Kontaktrolle erreicht werden, dass der Luftspalt zündet, bevor bei Blitzschlag ein zu großer Strom über die Erdungsbürste fließt. Die ermöglicht eine kleinere Dimensionierung der Erdungsbürste, was sowohl den Raumbedarf wie auch die Kosten verringert. Zweckmäßigerweise ist die Erdungsbürste so angeordnet, dass sie die Kontaktrolle an deren Stirnseite kontaktiert. Das hat den Vorteil, dass die von der Bürste bei einer Umdrehung zurückzulegende Umfangsstrecke kleiner gewählt sein kann als der Außenumfang der Kontaktrolle. Die von der Bürste zu leistende Laufleistung sinkt dadurch. Der Verschleiß wird weiter verringert. Es kann aber auch vorgesehen sein, die Kontaktrolle mit einem Ansatz zu versehen, der einen kleineren Durchmesser als der Durchmesser aufweist, mit dem die Kontaktrolle auf der Kontaktbahn abrollt. Auf diese Weise kann die Laufleistung und damit der Verschleiß der Erdungsbürste verringert werden.

Weiterhin ist es zweckmäßig, den Abrollbereich der Kontaktrolle ballig auszuführen. Damit wird ein Verkanten der Kontaktrolle gegenüber der Abrollbahn verhindert. Insbesondere wird damit auch dem gefürchteten sogenannten Kantentragen entgegengewirkt, das zu einem ungünstigen Verschleißbild sowie zu einer schlechteren elektrischen Verbindung führen würde.

Bei einer bewährten Ausführungsform ist die Abrollbahn und/oder die Kontaktrolle aus einer Kupfer-Chrom oder Kupfer-Beryllium Legierung hergestellt. Bei diesen Materialien wird eine sehr gute Verschleißfestigkeit erzielt. Unter dem Gesichtspunkt einfacher Wartung ist es von Vorteil, die Kontaktrolle als Verschleißteil auszulegen, damit die Abrollbahn über die erwartete Lebensdauer der Windenergieanlage hinweg nicht ausgetauscht werden braucht. Dazu besteht die Abrollbahn vorzugsweise aus einem Werkstoff, der eine höhere Verschleißfestigkeit besitzt als der Werkstoff der Kontaktrolle.

Bevorzugt ist einer der Blitzübertrager zwischen der Nabe und einem Maschinenträger der Gondel angeordnet. Häufig wird es dabei so sein, dass die Abrollbahn nabenfest und die Kontaktrolle am Maschinenträger angeordnet ist, jedoch ist auch die umgekehrte Anordnung möglich. Theoretische wälzt die Kontaktrolle auf der Abrollbahn ab, ohne dass die Kontaktrolle auf der Abrollbahn gleitet. Hinsichtlich der räumlichen Gestaltung kann die Abrollbahn die Form eines Kreisrings oder einer Zylindermantelfläche haben. Der Vorteil einer zylindermantelförmigen Abrollbahn mit einer koaxial ausgerichteten Kontaktrolle, gegenüber kreisringscheibenförmigen Abrollbahnen ist, dass die Kontaktrolle über ihre gesamte Breite mit der gleichen Umfangsgeschwindigkeit auf der Abrollbahn abrollt.

Es ist zweckmäßig, die Kontaktrolle an einer Schwenkführung anzuordnen. Damit kann einer Verringerung des Durchmesser der Kontaktrolle aufgrund von Verschleiß Rechnung getragen werden. Weiter ist die Kontaktrolle auch dann in sicherem Kontakt mit der Abrollbahn, wenn letztere von der idealen Kreisform abweicht. Die Schwenkführung kann insbesondere als Pendellagerung ausgebildet sein mit einem Pendelarm, an dessen gegenüberliegenden Enden ein Schwenklager einerseits und andererseits die Kontaktrolle angeordnet ist. Da mit einer solchen schwenkbaren Lagerung Toleranzen beim Abrollen auf der Abrollbahn gut ausgeglichen werden können, können auch Kontaktrollen mit relativ kleinen Durchmessern verwendet werden. Bei Windenergieanlagen der Megawattklasse können dies bspw. Durchmesser von 150 bis 250 mm sein, während die Abrollbahnen wesentlich größere Durchmesser im Bereich von einem oder mehr Metern aufweisen. Bei Drehzahlen der Kontaktrolle zwischen 15 U/min und 400 U/min ist auch gegenüber den vorgegebenen Wartungsintervallen eine hinreichende Standzeit gewährleistet. Zweckmäßig ist es, die Schwenkführung so auszubilden, dass die Kontaktrolle geschleppt ist. Damit ist es ermöglicht, dass sie auch bei größeren Unrundheiten sicher Kontakt zu der Abrollbahn hält. Zur weiteren Erhöhung der Kontaktsicherheit kann vorgesehen sein, eine Tandemanordnung mit zwei gegenläufig orientierten Schwenkführungen für je eine Kontaktrolle vorzusehen. Damit können nicht nur größere Unebenheiten ausgeglichen werden, sondern es ist auch ein sicherer Kontakt bei einem eventuellen Rückwärtslauf sichergestellt. Letzterer ist im normalen Betrieb zwar nicht vorgesehen, kann aber gerade in einer Sturmsituation auftreten, wenn die Anlage zwar stillgesetzt sein soll, aber durch eine plötzliche Windrichtungsänderung bei einfallender Böe doch in Bewegung gesetzt wird. Je nach Änderung der Windrichtung kann es dabei kurzzeitig zu einem Rückwärtslauf kommen.

Vorzugsweise ist der Pendelarm der Schwenkführung aus einem Isoliermaterial ausgeführt. Damit wird erreicht, dass das Schwenklager nicht im Blitzpfad ist. Der Gefahr einer Beschädigung dieses Blitzlagers wird damit entgegengewirkt, was ebenfalls einer Verbesserung der Standzeit des Blitzübertragers zugute kommt. Weiter ermöglicht es die Schwenkführung, eine gleichbleibende Länge der Luftstrecke der Funkenstrecke zu realisieren. Dazu kann der Gegenkontaktbereich der Funkenstrecke profiliert ausgeführt sein, um eine bessere Zündung zu erreichen. Die Funkenstrecke selbst besteht vorzugsweise aus einer abbrandfesten Metalllegierung, insbesondere einer Wolfram-Kupferlegierung. In jedem Fall ist es zweckmäßig, Mittel zur Einstellung der Luftstrecke der Funkenstrecke vorzusehen.

Üblicherweise ist vorgesehen, dass die Kontaktrolle bei Erreichen einer Verschleißmarke oder bei Beschädigung des Gegenkontaktbereichs der Funkenstrecke komplett auszutauschen ist. Dazu kann die Kontaktrolle als Vollrolle ausgebildet sein. Bei einem Austausch werden dann sowohl der Abrollbereich wie auch der Gegenkontaktbereich gemeinsam erneuert. Es kann aber auch vorgesehen sein, die Kontaktrolle als geteilte Rolle mit Nabenstück und auswechselbarem Radstück auszubilden. Bei einer solchen Konstruktion ist das Radstück wie eine Art Reifen aufgebaut und bildet den eigentlichen Abrollbereich der Kontaktrolle. Erfahrungsgemäß ist dieser Abrollbereich dem größten Verschleiß ausgesetzt, vor allem bei großen Windenergieanlagen mit entsprechend hoher Laufstrecke für die Kontaktrolle. Außer dem vereinfachten Austausch im Fall des fortgeschrittenen Verschleißes hat die Ausführung als geteilte Rolle weiter den Vorteil, dass das auswechselbare Radstück über Entkopplungselemente an dem Nabenstück angeordnet sein kann.

Durch die Entkopplungselemente kann die Einleitung von Schwingungen, die beim Abrollen des Radstücks auf der Abrollbahn entstehen, in den übrigen Teil der Windenergieanlage vermindert werden. Insgesamt wirken die Entkopplungselemente aufgrund ihres dämpfenden Verhaltens günstig in Bezug auf die Verringerung von Schwingungen. Geräuschemissionen, die durch das Abrollen der Kontaktrolle auf der Abrollbahn verursacht werden können, werden auf diese Weise wirksam bekämpft. Vorzugsweise sind die Entkopplungselemente als Gummimetalllager ausgeführt. Derartige Lager können als Normteile bezogen werden. Damit kann auf eine sehr wirtschaftliche Weise eine Entkopplung des Radstücks von der Nabe erreicht werden. Allerdings kann ein Risiko darin liegen, dass bei einem Ausfall von einem oder mehreren Entkopplungselementen das Radstück nicht mehr sicher an dem Nabenstück gehalten ist. Um einen Verlust des Radstücks zu vermeiden, der möglicherweise zu einem Ausfall der Windenergieanlage führen könnte, ist vorzugsweise dem Nabenstück zusätzlich eine Fixierscheibe zugeordnet, die von dem Radstück im montierten Zustand derart hintergriffen ist, dass sie ein Abfallen des Radstücks bei Versagen der Entkopplungselemente verhindert. Damit wird eine Notlaufeigenschaft erreicht, so dass auch bei einem Versagen der Entkopplungselemente das Radstück an dem Nabenstück verbleibt.

Ferner ist es zweckmäßig, wenn die Kontaktrolle einen gesonderten Laufgürtel aufweist, der den Abrollbereich überdeckt. Mit einem solchen Laufgürtel, der auf einer Vollrolle oder auf einem Radstück angeordnet sein kann, kann überraschenderweise eine erhebliche Reduktion des Abrollgeräuschs erreicht werden. Eine zweckmäßige Ausführung des Laufgürtels besteht in einer Wicklung aus leitfähigen Drahtseilen, wie bspw. Mehrfachlitzen-Rundkabel. Es können aber auch bürstenartige Konstruktionen vorgesehen sein, bspw. mit einer wie ein Bürstenrad ausgeführten Radialbürste. Die Borsten bestehen hierbei vorzugsweise aus Metalldraht. Zur Verringerung des Verschleißes kann es günstig sein, die Bürste in Gestalt einer Topfbürste auszuführen, deren ebenfalls vorzugsweise aus Metalldraht ausgeführte Borsten sich sowohl in radialer wie auch in axialer Richtung erstrecken. Damit kann eine besonders sichere Anlage der Borsten an die Abrollbahn erreicht werden, ohne dass durch Anstoßen der Borstenspitzen ein erhöhter Verschleiß auftritt.

Die Kontaktrolle kann als Innenläufer oder als Außenläufer ausgeführt sein. Zweckmäßiger ist sie im letzeren Fall über einen Haltebügel geführt, der zusätzlich als ein Kontaktelement fungieren kann. Dies ermöglicht einen besonders kompakten Aufbau des Blitzübertragers.

Es kann vorgesehen sein, die Kontaktrolle über ein Gleitlager zu lagern. Dieses kann zusätzlich als Kontaktelemente fungieren. Das bietet den Vorzug, dass auf besonders einfache Weise sowohl eine Lagerung der Kontaktrolle wie auch eine elektrische Kontaktierung bewirkt werden kann. Es versteht sich, dass die Abmessungen so gewählt sein müssen, dass sich ein hinreichend niederohmiger Übergangswiderstand ergibt, so dass die Blitzleistung ohne Schaden für das Gleitlager oder die Erdungsbürste übertragen werden kann. Bei einer anderen Ausführungsform ist die Kontaktrolle über elektrisch isolierte Wälzlager gelagert. Das bietet den Vorteil, dass ein besonders reibungsarmes und verschleißfestes Laufverhalten erreicht wird. Zur sicheren Übertragung der Blitzleistung bieten sich in diesem Fall die bereits erwähnten Funkenstrecken an.

Es ist zweckmäßig, wenn die Kontaktrolle durch ihr Eigengewicht gegen die Abrollbahn gedrückt ist. Dies ermöglicht gerade in Kombination mit der Schwenklagerung einen einfachen und wartungsarmen Aufbau. Gemäß einer besonders zweckmäßigen Ausführungsform der Erfindung ist die Kontaktrolle durch Fremdkraftbeaufschlagung gegen die Abrollbahn gedrückt. Dazu ist eine Andruckeinrichtung vorgesehen, die zweckmäßigerweise als Feder ausgeführt ist. Mit der Fremdkraftbeaufschlagung ist eine einfache und robuste Anpressung der Kontaktrolle an die Abrollbahn ermöglicht, und zwar unabhängig von der Lage des Blitzübertragers. Es ist insbesondere ermöglicht, den Blitzübertrager auch an solchen Orten anzubringen, an denen die Gewichtskraft einem Andrücken an die Abrollbahn entgegenwirkt. Dadurch wird mehr konstruktive Freiheit bei der Wahl des Anbringungsortes erreicht. Zudem ist es ermöglicht, mehrere Blitzübertrager über den Umfang verteilt anzuordnen. Weiter bietet sich diese Ausführung auch für Blitzübertrager an, die zwischen Nabe und Blattwurzel angeordnet sind, oder zwischen Gondel und Turm. Insbesondere im erstgenannten Fall ist wegen der auftretenden Fliehkräfte eine zuverlässige Fremdkraftbeaufschlagung ein großer Vorteil.

Optional kann vorgesehen sein, ein zusätzliches Dämpfungselement zur Fremdkraftbeaufschlagung vorzusehen. Damit wird erreicht, dass auch bei Unebenheiten oder bei hoher Laufgeschwindigkeit ein Springen verhindert werden kann, so dass ein sicherer Kontakt der Kontaktrolle auf der Abrollbahn beibehalten wird.

Zweckmäßigerweise ist ein die Erdungsbürste aufnehmender Bürstenhalter gegenüber einem Lagergehäuse der Kontaktrolle elektrisch isoliert. Damit ist eine Konfiguration der Blitzableitung ermöglicht, so dass der Blitzpfad nicht über die Erdungsbürste fließt, sondern auf einem parallelen Weg, vorzugsweise über die Funkenstrecke, zur Erde abgeleitet wird. Um zu verhindern, dass bei Blitzschlag die Blitzleistung hier einen unerwünschten Parallelpfad nimmt, erfolgt zweckmäßigerweise auch die Anordnung am Maschinenträger oder an der Nabe isoliert. Ferner ist es günstig, die Abrollbahn isoliert zu befestigen.

Bei einer besonders zweckmäßigen Ausführungsform ist zur Befestigung der Abrollbahn eine Tragstruktur vorgesehen, die an der Nabe angeordnete Speichen aufweist, wobei die Speichen aus isolierendem Material bestehen. Damit kann auch bei großen Windenergieanlagen mit entsprechend großer Abrollbahn eine Abrollbahn auf günstige Weise an der Nabe befestigt sein, und der Blitzpfad kann gezielt über die Funkenstrecken geführt werden. Eine zweckmäßige Ausführung der Speichen ist als Doppelspeiche in V-Anordnung. Dies ermöglicht eine kompakte Ausführung der Speichen. So können sie in den Winkelbereichen zwischen den Blattwurzelaufnahmen der Nabe angeordnet sein. Damit ist eine optimale Platzausnutzung ermöglicht.

Besonders vorteilhaft ist es, wenn die Tragstruktur nicht nur zur Befestigung der Abrollbahn dient, sondern gleichzeitig eine Verkleidung der Nabe (Spinnergehäuse) trägt.

Vorzugsweise ist zur weiteren Verringerung der Geräuschemission vorgesehen, dass die Abrollbahn über Entkopplungselemente an der Nabe oder der Tragstruktur befestigt ist.

Durch geeignete Einstellung einer Vorspannung der Entkopplungselemente an der Kontaktrolle und/oder Rollbahn kann eine Kraft erzeugt werden, die die Kontaktrolle und die Abrollbahn aneinander presst.

Die Erfindung kann wie folgt zusammengefasst und beansprucht werden. Gegenstand der Erfindung ist eine Windenergieanlage mit einem Turm zur Befestigung in einem Untergrund und einer darauf angeordneten Gondel, an der ein Rotor mit einer Nabe und Rotorblättern drehbar angeordnet ist und einen in der Gondel angeordneten Generator antreibt, wobei eine Blitzableitanlage zur Ableitung elektrischer Energie eines eingeschlagenen Blitzes in den Untergrund vorgesehen ist, deren Blitzpfad von den Rotorblättern und der Nabe über die Gondel zum Turm führt und mindestens einen Blitzübertrager zur Überleitung zwischen zwei relativ zueinander beweglichen Komponenten der Windenergieanlage aufweist, wobei an einer Seite des Blitzübertragers eine Abrollbahn, die mit dem Blitzpfad verbunden ist, und an der anderen Seite des Blitzübertragers eine darauf ablaufende Kontaktrolle, die mit einem Schleifkörper elektrisch leitend verbunden ist, welcher in elektrisch leitender Berührung mit einer Erdungsbürste steht, die vor Umwelteinflüssen gekapselt und über einen Bürstenhalter mit einer Erdungsleitung verbunden ist. Weiter kann vorgesehen sein, dass der Blitzübertrager eine mit einer Erdungsleitung verbundene Funkenstrecke aufweist, die auf die Abrollbahn, auf eine parallel zu der Abrollbahn verlaufende Kontaktbahn oder auf die Kontaktrolle gerichtet ist. Weiter kann ein Vorwiderstand für die Kontaktrolle vorgesehen sein, der so bemessen ist, dass der Luftspalt bei Blitzeinschlag zündet, bevor ein zu großer Strom über die Erdungsbürste fließt. Weiter kann vorgesehen sein, dass die Kontaktrolle einen die Abrollbahn kontaktierenden Abrollbereich und einen Gegenkontaktbereich für die Funkenstrecke aufweist. Weiter kann vorgesehen sein, dass der Abrollbereich der Kontaktrolle ballig ausgebildet ist. Weiter kann vorgesehen sein, dass die Abrollbahn aus einem Werkstoff besteht, der eine höhere Verschleißfestigkeit besitzt als der Werkstoff der Kontaktrolle. Weiter kann vorgesehen sein, dass die Abrollbahn und/oder die Kontaktrolle aus Kupfer-Chrom oder Kupfer-Beryllium besteht. Weiter kann vorgesehen sein, dass der Blitzübertrager in einem Übergangsbereich der Nabe zu einem Maschinenträger der Gondel angeordnet ist. Weiter kann insbesondere bei einer Windenergieanlage gemäß dem Oberbegriff des ersten Anspruchs vorgesehen sein, dass die Kontaktrolle an einer Schwenkführung angeordnet ist. Weiter kann vorgesehen sein, dass die Schwenkführung einen Pendelarm aufweist, an dessen gegenüberliegenden Enden ein Schwenklager und die Kontaktrolle angeordnet sind. Weiter kann vorgesehen sein, dass der Pendelarm aus einem Isoliermaterial besteht. Weiter kann vorgesehen sein, dass die Schwenkführung so ausgebildet ist, dass die Kontaktrolle geschleppt ist. Weiter kann vorgesehen sein, dass eine Tandemanordnung mit zwei gegenläufig orientierten Schwenkführungen für je eine Kontaktrolle vorgesehen ist. Weiter kann insbesondere bei einer Windenergieanlage gemäß dem Oberbegriff des ersten Anspruchs vorgesehen sein, dass die Kontaktrolle als Vollrolle ausgebildet ist. Weiter kann vorgesehen sein, dass die Kontaktrolle als geteilte Rolle mit Nabenstück und auswechselbarem Radstück ausgebildet ist.

Weiter kann vorgesehen sein, dass das auswechselbare Radstück über Entkopplungselemente an dem Nabenstück angeordnet ist. Weiter kann vorgesehen sein, dass die Entkopplungselemente vorzugsweise als Normteile ausgeführte Gummi-Metall-Lager sind. Weiter kann vorgesehen sein, dass an dem Nabenstück zusätzlich eine Fixierscheibe angordnet ist, die von dem Radstück im montierten Zustand derart hintergriffen ist, dass sie ein Abfallen des Radstücks bei Versagen der Entkopplungselemente verhindert. Weiter kann vorgesehen sein, dass die Kontaktrolle einen gesonderten Laufgürtel aufweist, der den Abrollbereich überdeckt. Weiter kann vorgesehen sein, dass der Laufgürtel eine vorzugsweise mehrlagige Wicklung aus leitfähigen Drahtseilen ist. Weiter kann vorgesehen sein, dass der Laufgürtel als eine Bürste mit radial abstehenden Borsten aus leitfähigem Material ausgebildet ist. Weiter kann vorgesehen sein, dass der Laufgürtel als eine Topfbürste mit radial und axial abstehenden Borsten aus leitfähigem Material ausgebildet ist. Weiter kann vorgesehen sein, dass die Kontaktrolle als Innenläufer ausgeführt ist. Weiter kann vorgesehen sein, dass die Kontaktrolle als Außenläufer ausgeführt ist. Weiter kann vorgesehen sein, dass die Kontaktrolle über ein Gleitlager gelagert ist, das als Kontaktelement fungiert. Weiter kann vorgesehen sein, dass ein elektrisch isoliertes Wälzlager für die Kontaktrolle vorgesehen ist. Weiter kann vorgesehen sein, dass die Kontaktrolle durch ihr Eigengewicht gegen die Abrollbahn gedrückt ist. Weiter kann vorgesehen sein, dass die Kontaktrolle mittels Fremdkraftbeaufschlagung gegen die Abrollbahn gedrückt ist. Weiter kann vorgesehen sein, dass als Andruckeinrichtung zur Fremdkraftbeaufschlagung eine Feder vorgesehen ist. Weiter kann vorgesehen sein, dass ein von der Feder gesondertes oder mit ihr kombiniertes Dämpfungselement vorgesehen ist. Weiter kann vorgesehen sein, dass die Funkenstrecke derart ausgebildet ist, dass ihre Luftstrecke unterhalb der Funkenstrecke einstellbar ist. Weiter kann vorgesehen sein, dass ein die Erdungsbürste aufnehmender Bürstenhalter gegenüber einem Lagergehäuse der Kontaktrolle elektrisch isoliert ist. Weiter kann vorgesehen sein, dass als Tragstruktur für die Abrollbahn an der Nabe angeordnete Speichen vorgesehen sind. Weiter kann vorgesehen sein, dass die Speichen aus isolierendem Material bestehen. Weiter kann vorgesehen sein, dass die Speichen als Doppelspeiche in V-Anordnung ausgeführt sind, die vorzugsweise in zwischen Blattwurzelaufnahmen liegenden Winkelbereichen angeordnet sind. Weiter kann vorgesehen sein, dass die Abrollbahn über Entkopplungselemente an der Nabe oder der Tragstruktur befestigt ist.

Die Erfindung wird nachfolgend unter Bezugnahme auf die Zeichnung erläutert, in der vorteilhafte Ausführungsbeispiele der Erfindung dargestellt sind. Es zeigen:
- Fig. 1: eine Gesamtansicht einer erfindungsgemäßen Windenergieanlage;
- Fig. 2: einen Blitzübertrager gemäß einem ersten Ausführungsbeispiel, von der Nabe in Richtung Gondel gesehen;
- Fig. 3: einen Schnitt entlang der Linie III-III der Fig. 2;
- Fig. 4: die Übertragungsvorrichtung der Fig. 3 und 4 in Blickrichtung auf einen Bürstenhalter;
- Fig. 5: eine schematische Ansicht eines zweiten Ausführungsbeispiels eines erfindungsgemäßen Blitzübertragers;
- Fig. 6: eine schematische Ansicht eines dritten Ausführungsbeispiels;
- Fig. 7: eine schematische Ansicht eines vierten Ausführungsbeispiels;
- Fig. 8: an der Windenergieanlage angeordnete Blitzübertrager gemäß den Fig. 5 bis 7 in vergrößerter Darstellung;
- Fig. 9: eine alternative Ausführung einer Kontaktrolle;
- Fig. 10: eine weitere alternative Ausführung einer Kontaktrolle;
- Fig. 11: Ausführungsbeispiele für Laufgürtel der Kontaktrolle;
- Fig. 12: Ansicht einer Tragstruktur für eine Abrollbahn; und
- Fig. 13: eine Detailansicht aus Fig. 12.

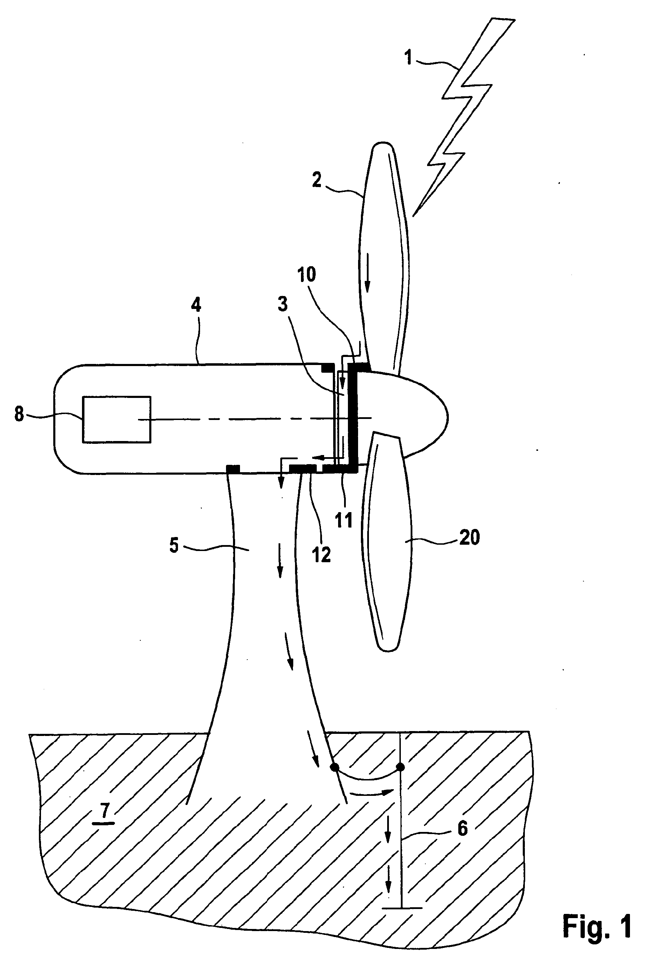

Eine Windenergieanlage gemäß einem Ausführungsbeispiel der Erfindung weist einen Turm 5 auf, der mit seinem Fuß in einem festen Untergrund (Erdboden) 7 gehalten ist (s. Fig. 1). Oben auf dem Turm ist eine Gondel 4 angeordnet, an deren vorderer Stirnseite (in Fig. 1 rechts dargestellt) ein Rotor mit Rotorblättern 2 und einer Nabe 3 angeordnet ist. Der Rotor ist über eine Antriebswelle (nicht dargestellt) mit einem Generator 8 mechanisch verbunden, der im Inneren der Gondel 4 angeordnet ist. Eine Blitzableitanlage ist gebildet durch einen Blattleiter 20 zur Weiterleitung eines an beliebiger Stelle des Rotorblatts 2 einschlagenden Blitzes 1 zu einem ersten Übertrager 10, der zwischen dem Rotorblatt 2 und der Nabe angeordnet ist, einen Nabenring zur Weiterleitung an einen zweiten Übertrager 11, der zwischen der Nabe 3 und der Gondel 4 angeordnet ist, und an einen dritten Übertrager 12, der zwischen der Gondel 4 und dem Turm 5 im Bereich eines Azimutlagers (nicht dargestellt) angeordnet ist und von dort über eine turmfeste Erdung (nicht dargestellt) zu dem in den Untergrund 7 eingebrachten Tiefenerder 6 führt. Der dadurch gebildete Blitzpfad ist durch Pfeile in Fig. 1 symbolisiert. Die Übertrager 10, 11, 12 sind so ausgebildet, dass sie eine sichere Überleitung des Blitzes zwischen den beiden relativ zueinander drehbeweglich angeordneten Komponenten, zwischen denen sie angeordnet sind, gewährleisten.

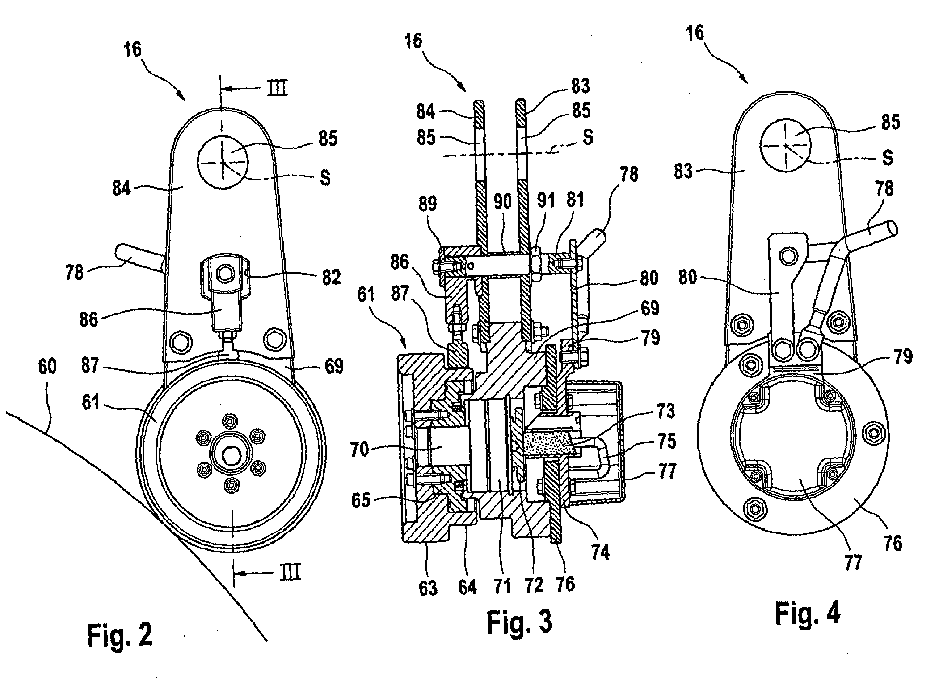

Die Fig. 2 bis 4 zeigen ein erstes Ausführungsbeispiel für einen Blitzübertrager 16. Er ist zur kontinuierlichen Ableitung elektrischer Ladungen der Windenergieanlage ausgebildet. Der Blitzübertrager 16 umfasst eine Kontaktrolle 61 mit einem ballig ausgeführten Abrollbereich 63, der auf der nur andeutungsweise eingezeichneten Abrollbahn 60 sich mit einer Relativbewegung der Abrollbahn 60 gegenüber der Kontaktrolle 61 abwälzt. In diesem Ausführungsbeispiel besitzt die Kontaktrolle 61 einen Außendurchmesser von 200 mm. Die Kontaktrolle 61 ist an einen auf eine Tragwelle 70 aufgepressten Flansch 65 geschraubt. Die Tragwelle 70 ist mit Lagern 71 in einem Lagergehäuse 69 gelagert. Die Tragwelle 70 ist an dem dem Flansch 65 abgewandten Ende mit einem Schleifkörper 72 verbunden, wobei der Schleifkörper 72 über eine von der Flanschseite her eingesetzte Schraube (nicht dargestellt) an der Tragwelle 70 befestigt ist. Der Schleifkörper 72 folgt damit der Bewegung der Kontaktrolle 61. Natürlich ist es in einer einfachen Ausführung eines Blitzübertragers möglich, manche oder alle Teile 61, 65, 70 und 72 aus einem Stück zu fertigen. Diese Variante soll ausdrücklich auch von Anspruch 1 umfasst sein. Der Schleifkörper 72 steht in elektrisch leitender Berührung mit einer Erdungsbürste 73, die mit einer Federkraft in axiale Richtung auf den Schleifkörper 72 gedrückt wird. Die Erdungsbürste 73 ist verdrehfest in einem Bürstenhalter 74 gehalten. Über eine Leitung 75 besteht ein elektrischer Kontakt zwischen der Erdungsbürste 73 und dem Bürstenhalter 74. Der Bürstenhalter 74 ist gegenüber dem Lagergehäuse 69 isoliert befestigt. Der Bürstenhalter 74 ist hierzu mit einem ringscheibenförmig ausgebildeten Isoliermittel 76 verbunden, welches jedoch am Lagergehäuse 69 befestigt ist. Der Außendurchmesser des Isoliermittels 76 ist in diesem Ausführungsbeispiel größer als der Außendurchmesser des angrenzenden Lagergehäuses 69. Die Abmessungsverhältnisse sollen Blitzüberschläge von der Kontaktrolle 61 bzw. dem Lagergehäuse 69 auf den Bürstenhalter 74 verhindern. Der Bereich des Schleifkörpers 72, der Erdungsbürste 73 und der Leitung 75 ist von einer Kappe 77 bedeckt, welche den Kontaktbereich zwischen dem Schleifkörper 72 und der Erdungsbürste 73 vor Umwelteinflüssen schützt. Die Lager 71 sind in nicht näher dargestellter Weise vor dem Zutritt von Staub der Erdungsbürste 73 geschützt. Die Kappe 77 ist auf den Bürstenhalter 74 geschraubt, wobei der Bürstenhalter 74 an seinem in der Bildebene oberen Ende aus der Kappe 77 herausgeführt ist und einen Anschlussflansch 79 für die schraubtechnische Befestigung einer Erdungsleitung 78 besitzt. An diesen Anschlussflansch 79 ist eine zweite Erdungsleitung 80 in Form einer Metallplatte angeschlossen, die elektrisch leitend mit einem Tragbolzen 81 verschraubt ist. Der Tragbolzen 81 durchsetzt fluchtende Öffnungen in zwei parallel zueinander angeordneten Halterplatten 83, 84, die als Pendelarm fungieren und an ihrem in der Bildebene unteren Ende über jeweils zwei Schrauben mit dem Lagergehäuse verschraubt sind. Im Bereich ihrer oberen Enden besitzen die Halteplatten 83, 84 eine fluchtende Bohrung 85. Die Längsachse dieser Bohrung 85 ist die Schwenkachse S, um welche der gesamte Übertrager 16 einschließlich der Halterplatten 83, 84 verschwenkbar ist. Eine vorteilhafte Ausführung S sieht vor, die Kontaktrolle durch eine in der Schwenkachse montierte Drehfeder mit Fremdkraft zu beaufschlagen.

Der Tragbolzen 81 ragt auf seiner dem Anschlussflansch 79 abgewandten Seite aus der Öffnung 82 der Halterplatte 84 heraus. Hier ist der Tragbolzen 81 mit einem L-förmigen Winkelformstück 86 verspannt, wobei in den vertikal und parallel zu den Halterplatten 83, 84 verlaufenden Schenkel des Winkelformstücks 86 die Funkenstrecke 87 höhenverstellbar und über eine Mutter gekontert eingeschraubt ist. Die Funkenstrecke 86 ist radial auf einen Gegenkontaktbereich 64 der Kontaktrolle 61 gerichtet. Dieser Gegenkontaktbereich 64 ist ein konzentrisch neben dem Abrollbereich 63 verlaufender zylindermantelförmiger Absatz. Der Abstand zwischen dem Gegenkontaktbereich 64 und der Funkenstrecke 87 ist vorzugsweise kleiner als 1 mm.

Der horizontal verlaufende Schenkel des Winkelformstücks 86 ist an der Halterplatte 84 abgestützt und in einer die Öffnung 82 umgebenden unrunden Aussparung verdrehfest gelagert, so dass die radiale Ausrichtung der Funkenstrecke 87 gewährleistet ist. Über eine Stützplatte 89 wird der horizontal verlaufende Schenkel des Winkelformstücks 86 mittels einer in den Tragbolzen 81 stirnseitig eingesetzten Schraube gegen die Halteplatte 84 verspannt und ist damit lagerorientiert. Eine Hülse 90 zwischen den Halterplatten 83, 84 und eine auf den Tragbolzen 81 aufgeschraubte Haltemutter 91 dienen als Widerlager für das Winkelformstück 86.

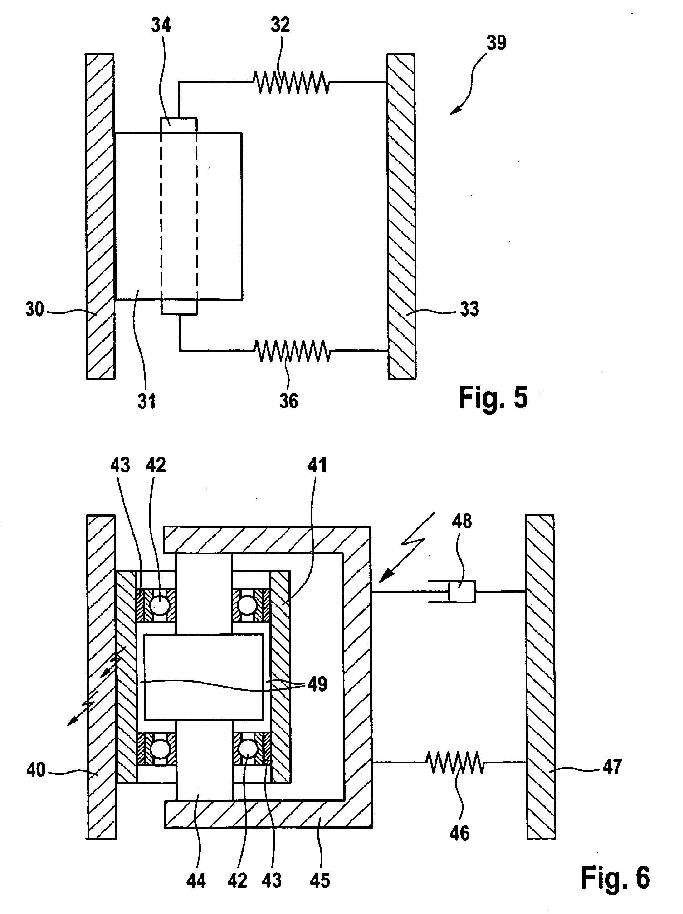

Nachfolgend wird an einem Beispiel des zweiten Übertragers 11 der Aufbau eines weiteren Ausführungsbeispiels des erfindungsgemäßen Blitzübertragers 39 näher erläutert (s. Fig. 5). Der Blitzübertrager umfasst eine Abrollbahn 30, die drehfest zur Gondel 4 angeordnet ist. Ferner umfasst er eine Kontaktrolle 31, die über Haltefedern 32, 36 und einen Halter 33 drehfest an der Nabe angeordnet ist. Die Abrollbahn 30 ist ringartig ausgeführt, so dass bei Drehung des Rotors die an der Nabe angeordnete Kontaktrolle 31 stets entlang der Abrollbahn 30 läuft. Die Haltefedern 32, 36 sind so ausgebildet, dass sie mit einer Lagerwelle 34 eines Gleitlagers der Kontaktrolle 31 zusammenwirken. Sie üben eine in Richtung der Abrollbahn 30 gerichtete Kraft auf die Lagerwelle 34 aus. Die Kontaktrolle 31 wird dadurch bei ihrer Bewegung entlang der Abrollbahn 30 so fest auf sie gedrückt, dass sie sicher rollt und nicht durchrutscht und dass ein sicherer ohmscher Kontakt mit der Abrollbahn 30 hergestellt ist. Laborversuche haben gezeigt, dass eine ausreichend große Anpresskraft (> 300N, vorzugsweise > 800N bei der Rolle aus Fig. 2 bis 4) Schäden in der Laufbahn durch Blitzübertragung vermeidet. In dem dargestellten Ausführungsbeispiel führt der Blitzpfad des Blitzübertragers 39 über den Halter 33, die aus leitfähigem Material bestehenden Haltefedern 32, 36 die Gleitlagerwelle 34, die Kontaktrolle 31 schließlich zur Abrollbahn 30. Zur Ableitung statischer Entladungen kann optional die Erdungsbürste (nicht dargestellt) vorgesehen sein.

In Fig. 6 ist ein drittes Ausführungsbeispiel mit den erfindungsgemäßen Blitzübertrager dargestellt. Es unterscheidet sich von dem in Fig. 5 dargestellten Ausführungsbeispiel im Wesentlichen dadurch, dass anstelle einer Gleitlagerung eine Wälzlagerung vorgesehen ist. Dazu ist die Kontaktrolle 41 hohl ausgeführt. In ihrem Inneren sind zwei Wälzlager 42 angeordnet, die wiederum auf einer gemeinsamen Lagerwelle 44 sitzen. Die Wälzlager 42 sind über einen Isolierring 43 von der Kontaktrolle 41 isoliert. Die Lagerwelle 44 ist zwischen Schenkeln eines U-förmigen Haltebügels 45 angeordnet. Dieser ist mit seinem die beiden Schenkel verbindenden Mittelstück über eine Haltefeder 46 und ein Dämpfungselement 48 mit einem Halter 47 verbunden. Die Haltefeder 46 beaufschlagt über den Haltebügel 45 die Kontaktrolle 41 mit einer von dem Halter 47 weg führenden, in Richtung einer gegenüberliegend angeordneten Abrollbahn 40 gerichteten Kraft. Der durch diesen Blitzübertrager geschaffene Blitzpfad verläuft wie folgt: Ausgehend von dem Halter 47 wird die elektrische Energie des Blitzes über die Haltefedern 46 zum Haltebügel 45 geführt. Von dort führt der Pfad weiter über die Lagerwelle 44 und einen Luftspalt 49 auf die Innenseite der Kontaktrolle. Abgeführt wird die Blitzenergie über die Außenseite der Kontaktrolle 41, die auf der Abrollbahn 40 abrollt.

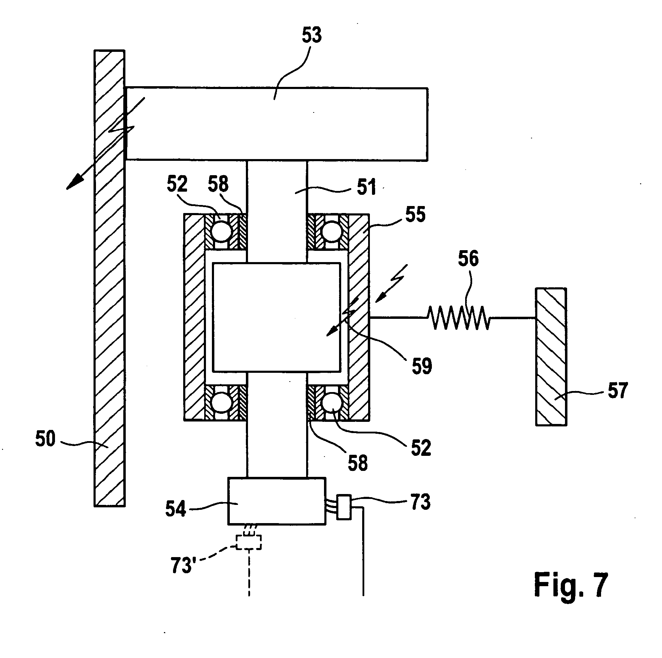

In Fig. 7 ist ein weiteren Ausführungsbeispiel dargestellt. Anders als bei dem in Fig. 6 dargestellten Ausführungsbeispiel mit einer als Außenläufer ausgeführten Kontaktrolle ist bei dem in Fig. 7 dargestellten Ausführungsbeispiel die Kontaktrolle 51 als Innenläufer ausgeführt. Wie auch in den beiden vorangehenden Ausführungsbeispielen ist ein Halter 57 sowie eine (oder mehrere) Haltefeder 56 vorgesehen. Die Haltefeder 56 wirkt auf ein Haltegehäuse 55, das hohl ausgeführt ist und an seinen Stirnseiten jeweils ein Wälzlager 52 aufweist. Die Wälzlager 52 sind über einen Isolierring 58 auf der Kontaktrolle 51 gelagert. Die Kontaktrolle 51 ist in mehrere Bereiche untergliedert. Ausgehend von einem (in Fig. 7 dem unteren) Ende weist sie einen Gegenkontaktbereich 54, einen ersten Lagerungsabschnitt mit einem kleineren Durchmesser, einen Funkenstreckenabschnitt mit einem etwa ähnlichen Durchmesser, einen zweiten Lagerungsabschnitt mit kleinem Durchmesser und schließlich einen Abrollbereich 53 mit größerem Durchmesser auf. Die Isolierringe 58 sitzen auf den ersten und zweiten Lagerabschnitten. Der dazwischen liegende Funkenstreckenabschnitt ist in seinem Außendurchmesser auf die Innenabmessungen des Lagergehäuses 55 in der Weise abgestimmt, dass sich ein Spalt von wenigen Zehntel Millimetern (im Ausführungsbeispiel 0,1 mm) ergibt. Damit wird die Möglichkeit geschaffen, im Bedarfsfall Blitzenergie über die dadurch gebildete Funkenstrecke 59 auf die Kontaktrolle 51 zu übertragen, wobei die auftretende Überschlagsspannung auf Grund des geringen Spaltabstands niedrig und für die elektrischen Komponenten der Windenergieanlage gut verträglich ist. Die Kontaktrolle 51 rollt mit ihrem Abrollbereich 53 auf der Abrollbahn 50 ab. Zur elektrischen Kontaktierung ist die Erdungsbürste 73 vorgesehen. Sie wirkt vorzugsweise auf den Außendurchmesser des Gegenkontaktbereichs 54 ein. Damit wird eine gut leitfähige, niederohmige Verbindung erreicht. Auf Grund des geringeren Durchmessers ist der Umfang des Gegenkontaktbereichs 54 kleiner als der des Abrollbereichs 53, so dass die Bürste 73 auf dem Gegenkontaktbereich 54 eine geringere Strecke zurücklegt als der Abrollbereich 53 auf der Abrollbahn 50. Dadurch verringert sich der Verschleiß der Bürste 73, so dass auch bei sehr großen Windenergieanlagen mit entsprechend groß bemessenen mechanischen Komponenten die Bürste 73 keinem erhöhten Verschleiß unterliegt. Eine weitere Verringerung der Laufstrecke der Bürsten kann mittels der in Fig. 7 gestrichelt dargestellten alternativen Anordnung der Bürste 73' erreicht werden. Anders als die Bürste 73 wirkt sie nicht auf den Außendurchmesser des Kontaktabschnitts 58, sondern auf dessen Stirnseite. Je nach Positionierung der Bürste 73' verringert sich der für sie wirksame Umfang und damit ihre Laufstrecke noch weiter.

Die bereits beschriebene zusätzliche Funkenstrecke 59 hat den Vorteil, dass sie parallel zu der Verbindung mit der Bürste 73 eine hochstromfähige Verbindung bereitstellt. Dies dient als zusätzliche Sicherheit bei einem Ausfall der Bürste und erhöht die Übertragungssicherheit bei sehr hohen Blitzenergien.

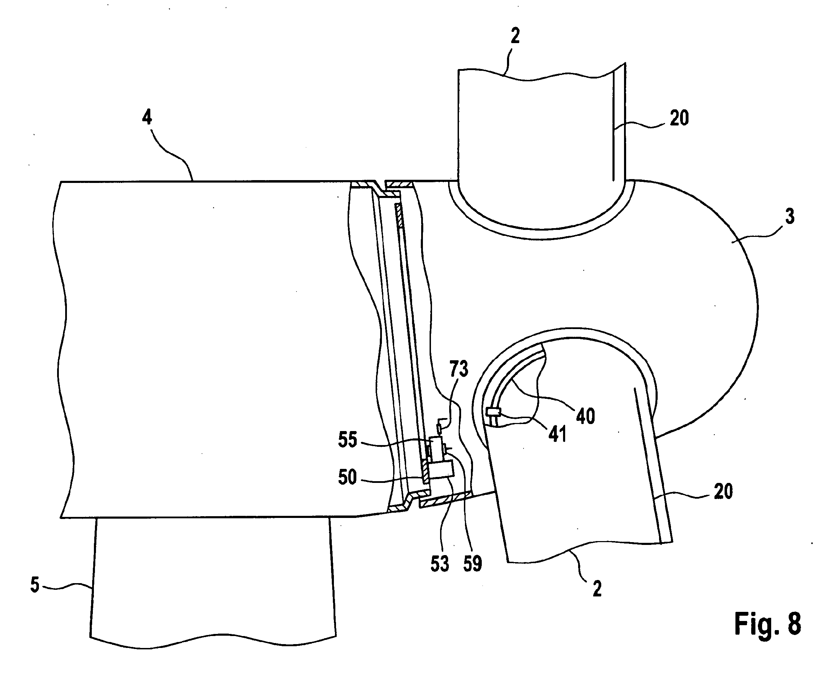

In Fig. 8 ist die Anordnung der Blitzübertrager gemäß den Fig. 5 bis 7 an einer Windenergieanlage dargestellt. Dargestellt sind die Rotornabe 3 mit ihrem Spinnergehäuse, die daran angeordneten Rotorblätter 2 mit ihren Blattwurzeln, ein Teil der Gondel 4 sowie ein oberer Teil des Turms 5. Zur Übertragung der Blitzenergie zwischen den Rotorblättern 2 und der Rotornabe 3 ist ein Übertrager gemäß dem zweiten Ausführungsbeispiel vorgesehen. Man erkennt in der zum Teil freigeschnittenen Darstellung des unteren Rotorblatts 2 einen Bereich der Abrollbahn 40. Ferner ist schematisch dargestellt die auf der Abrollbahn 40 ablaufende Kontaktrolle 41. Mit der Kontaktrolle 41 sind schematisch dargestellte Blitzaufnehmer 20 der Rotorblätter verbunden. Mehrere Übertrager gemäß dem dritten Ausführungsbeispiel sind an dem Übergang zwischen Rotornabe 3 und Gondel 4 vorgesehen, von denen einer dargestellt ist. Die Abrollbahn 50 ist drehfest an der Gondel 4 angeordnet. Auf ihm läuft die Kontaktrolle 51 ab, die über die Bürste 73 kontaktiert ist. Zusätzlich ist ein hochstromfähiger Kontakt über eine im Haltegehäuse 55 angeordnete Funkenstrecke 59 vorgesehen. Die Abrollbahn 40 ist mittels nicht dargestellter Verbindungen elektrisch leitend mit der Bürste 73 bzw. dem Haltegehäuse 55 verbunden. Die Abrollbahn 50 ist in nicht dargestellter Weise über einen weiteren Übertrager mit dem Turm 5 und weiter mit dem Untergrund 7 verbunden und dort geerdet.

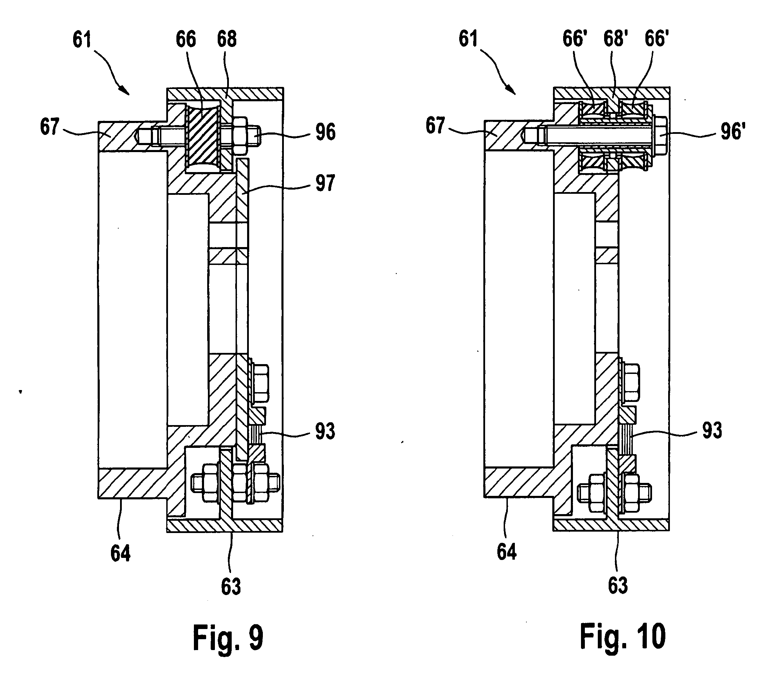

In Fig. 9 und 10 ist eine geteilte Ausführung der Kontaktrolle am Beispiel der Kontaktrolle 61 dargestellt. Die Kontaktrolle 61 umfasst ein Nabenstück 67 und ein Radstück 68. Das Nabenstück 67 ist, wie vorstehend in Bezug auf die Fig. 3 beschrieben, an dem Flansch 65 befestigt. Der Außenmantel des Nabenstücks 67 bildet den Gegenkontaktbereich 64. An der flanschfernen Stirnseite des Nabenstücks 67 ist das Radstück 68 mittels als Gummi-Metall-Lager 66 ausgeführten Entkopplungselementen angeordnet. Die Befestigung erfolgt durch eine Verschraubung 96. Das Radstück 68 ist ein im Querschnitt T-förmiges rotationssymmetrisches Profil. Sein Mantel fungiert als Abrollbereich 63. Am flanschfernen Ende des Nabenstücks 67 ist eine Fixierscheibe 97 angeordnet. Ihr Durchmesser ist so bemessen, dass er größer ist als der freie Innendurchmesser des Radstücks 68. Die Fixierscheibe 97 wird nach dem Radstück 68 montiert. Letzterer hintergreift im montierten Zustand mit seinem zur Befestigung an dem Gummi-Metall-Lager 66 dienenden Befestigungsflansch die Fixierscheibe 97. Damit ist ein Abfallen des Radstücks 65 von dem Nabenstück 67 auch bei einem Versagen der Gummi-Metall-Lager 66 verhindert. Zur elektrischen Verbindung des Radstücks 68 mit dem Nabenstück 67 sind flexible Brücken 93 an einem leitfähigen Band vorgesehen. Alternativ kann der Spalt zwischen Nabenstück 67 und Radstück 68 auch als Funkenstrecke ausgeführt sein.

In Fig. 10 ist eine abgewandelte Ausführungsform dargestellt. Sie unterscheidet sich von der in Fig. 9 dargestellten im Wesentlichen dadurch, dass das Radstück 68' angepasst ist für eine geänderte Ausführung der Gummi-Metall-Lager 66'. Letztere sind als Doppellager ausgeführt und über eine gemeinsame Befestigungsschraube 96' in dem Nabenstück 67 verankert. Im Normalbetrieb erfolgt eine Dämpfung von Schwingungen über das Doppellager 66'. Fällt eines der beiden Gummi-Metall-Elemente des Doppellagers 66' aus, so ist das Radstück 68' über die Schraube 96' noch an dem Nabenstück 67 gehalten. Das Radstück 68' ist damit auch bei Versagen des Gummi-Metall-Lagers 66' gegen Verlust gesichert. Die Gummi-Metall-Elemente können so ausgelegt sein, dass sie die Funktion der Feder 46 und des Dämpfers 48 aus Fig. 5 übernehmen.

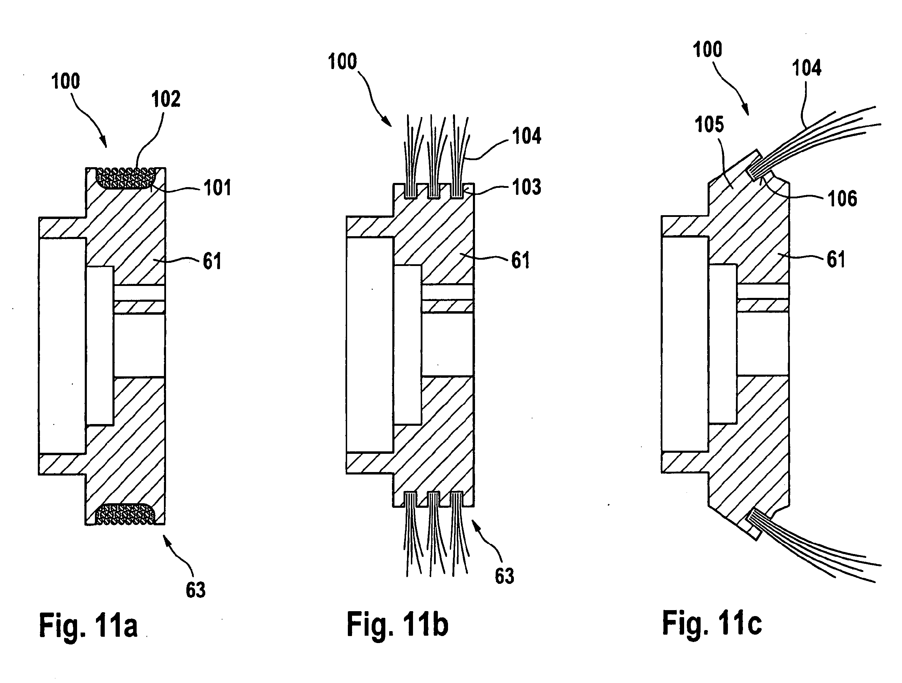

In Fig. 11 sind weitere Ausführungsbeispiele für die Kontaktrollen am Beispiel der Kontaktrolle 61 dargestellt. Sie weisen einen gesonderten Laufgürtel 100 auf. In Fig. 11a ist dieser Laufgürtel 100 als eine Wicklung 102 von Drahtseilen ausgeführt. Bei den Drahtseilen handelt es sich um Mehrfach-Litzen-Rundkabel in geschlagener Ausführung. Die jeweiligen Enden sind mit der Kontaktrolle 61 geklemmt oder verschraubt. Auch eine Lötbefestigung ist möglich. Zur sicheren Aufnahme der Wicklung 102 an der Kontaktrolle 61 ist eine Umfangsnut 101 in dem Abrollbereich 63 der Kontaktrolle 61 vorgesehen. Die Umfangsnut 101 weist in einem Querschnitt ein in etwa U-förmiges Profil auf und ist so bemessen, dass die Wicklung 102 von Drahtseilen sicher darin gehalten ist.

In Fig. 11b ist eine alternative Ausführungsform dargestellt. Hierbei ist der Laufgürtel 100 als eine Radialbürste ausgeführt. Die Kontaktrolle 61 weist dazu in ihrem Abrollbereich 63 eine Mehrzahl von über den Umfang verteilten Bohrungen 103 in mehrreihiger Anordnung auf. In diese Bohrungen sind Borsten 104 eingearbeitet. Die Borsten stehen in radialer und ggf. auch in tangentialer Richtung von der Kontaktrolle 61 ab. Die Länge der Borsten 104 ist so bemessen, dass sie die Abrollbahn (in Fig. 11 nicht dargestellt) sicher kontaktieren.

Eine weitere alternative Ausführungsform ist in Fig. 11c dargestellt. Die Kontaktrolle weist an ihrem Außenumfang höckerartige Erhebungen 105 auf, in die eine Reihe von regelmäßig über den Umfang verteilte Schrägbohrungen 106 eingearbeitet sind. Darin aufgenommen sind Borsten 104. Die Orientierung der Schrägbohrungen 106 ist so, dass die Borsten 104 sowohl in radialer wie auch axialer Richtung schräg von der Kontaktrolle 61 abragen. Die Kontaktrolle 61 fungiert damit als Bürstenrad, wobei die Borsten 104 sich im Betrieb mit einem beträchtlichen Teil ihrer freien Länge an die (in Fig. 11 nicht dargestellte) Abrollbahn 60 anlegen. Erreicht wird mit dem in den Fig. 11a bis c dargestellten Laufgürtel, dass die Kontaktrolle 61 mit geringerer Geräuschemission auf der Abrollbahn 60 läuft.

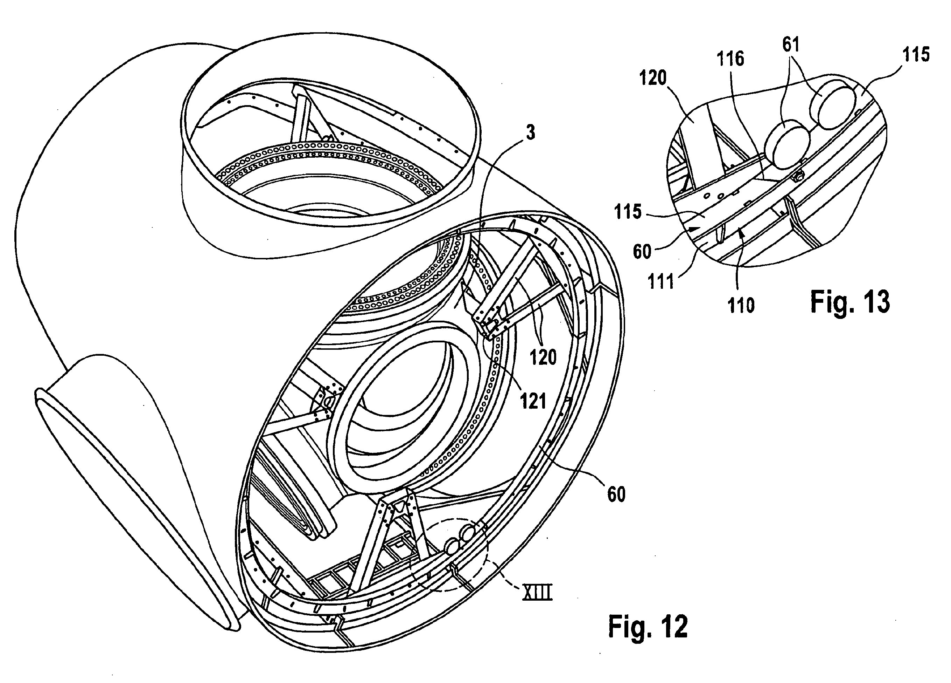

In Fig. 12 und 13 ist eine Rückansicht der Nabe 3 mit einer aufgesetzten Spinnerverkleidung dargestellt. An der Nabe 3 sind im Bereich zwischen den ringförmigen Rotorblattaufnahmen mehrere Speichen 120 über Träger 121 angeordnet. Jeweils zwei Speichen 120 sind in nach radial außen divergierender V-Anordnung an einem Träger 121 angeordnet. An dem radial äußeren Ende der Speichen 120 ist ein Tragring 110 angeordnet. Sein Durchmesser ist nur etwas kleiner als derjenige der Spinnerverkleidung. Der Tragring 110 ist aus mehren Segmenten 111 mit T-förmigem Profil zusammengesetzt. Zur Verbindung zwischen dem äußeren Ende der Speichen 120 und den Segmenten 111 des Tragrings 110 sind Gummi-Metall-Lager (nicht dargestellt) als Entkopplungselemente vorgesehen. Sie bewirken eine schwingungstechnisch und insbesondere akustische Entkopplung des Tragrings 110 von der Nabe 3. Damit wird unerwünschten Geräuschemissionen, im besonderen Dröhnen, entgegengewirkt. An der nach innen weisenden Fläche des Tragrings 110 sind aus einer leitfähigen Kupfer-Chrom-Legierung bestehende Streifensegmente 115 angeordnet. Sie bedecken die nach innen weisende Fläche der Segmente 111 vollständig. Die Streifen liegen auf Stoß aneinander, wobei der Stoß 116 schräg-winklig ausgeführt ist. Die Streifen 115 bilden zusammen mit den Segmenten 111 der Tragstruktur 110 die Abrollbahn für die (in Fig. 13 lediglich symbolhaft dargestellten) Kontaktrollen 61. Die in Fig. 13 dargestellten Kontaktrollen sind über gegenläufige Pendelarme (nicht dargestellt) im Tandem angeordnet.

Die Speichen 120 sind aus einem isolierenden Material, vorzugsweise GFK oder Polyamid. Durch die Isolierung wird erreicht, dass von einem Blitzeinschlag herrührende Ladung über die Kontaktrollen 61 abgeführt werden kann, ohne dass sie über die Nabe 3 läuft. Das dient dem Schutz von empfindlichen Bauelementen in der Nabe 3.

## Patentansprüche

1. Windenergieanlage mit einem Turm (5) zur Befestigung in einem Untergrund (7) und einer darauf angeordneten Gondel (4), an der ein Rotor mit einer Nabe (3) und Rotorblättern (2) drehbar angeordnet ist und einen in der Gondel (4) angeordneten Generator (8) antreibt, wobei eine Blitzableitanlage zur Ableitung elektrischer Energie eines eingeschlagenen Blitzes in den Untergrund (7) vorgesehen ist, deren Blitzpfad von den Rotorblättern (2) und der Nabe (3) über die Gondel (4) zum Turm (5) führt und mindestens einen Blitzübertrager (10, 11, 12, 16, 39) zur Überleitung zwischen zwei relativ zueinander beweglichen Komponenten der Windenergieanlage aufweist,
**dadurch gekennzeichnet, dass**
an einer Seite des Blitzübertragers (10, 11, 12, 16, 39) eine Abrollbahn (30, 40, 50, 60), die mit dem Blitzpfad verbunden ist, und an der anderen Seite des Blitzübertragers eine darauf ablaufende Kontaktrolle (31, 41, 51, 61), die mit einem Schleifkörper (72) elektrisch leitend verbunden ist, welcher in elektrisch leitender Berührung mit einer Erdungsbürste (73) steht, die vor Umwelteinflüssen gekapselt und über einen Bürstenhalter (74) mit einer Erdungsleitung (78) verbunden ist.

2. Windenergieanlage nach Anspruch 1,
**dadurch gekennzeichnet, dass**
der Blitzübertrager (10, 11, 12, 16, 39) eine mit einer Erdungsleitung (80) verbundene Funkenstrecke (59) aufweist, die auf die Abrollbahn (30, 40, 50, 60), auf eine parallel zu der Abrollbahn (30, 40, 50, 60) verlaufende Kontaktbahn oder auf die Kontaktrolle (31, 41, 51, 61) gerichtet ist.

3. Windenergieanlage nach Anspruch 2,
**dadurch gekennzeichnet, dass**
die Kontaktrolle (31, 41, 51, 61) einen die Abrollbahn (30, 40, 50, 60) kontaktierenden Abrollbereich (63) und einen Gegenkontaktbereich (64) für die Funkenstrecke (59) aufweist.

4. Windenergieanlage nach einem der vorhergehenden Ansprüche,
**dadurch gekennzeichnet, dass**
der Abrollbereich (63) der Kontaktrolle (31, 41, 51, 61) ballig ausgebildet ist.

5. Windenergieanlage nach einem der vorhergehenden Ansprüche,
**dadurch gekennzeichnet, dass**
die Abrollbahn (30, 40, 50, 60) aus einem Werkstoff besteht, der eine höhere Verschleißfestigkeit besitzt als der Werkstoff der Kontaktrolle (31, 41, 51, 61).

6. Windenergieanlage nach Anspruch 5,
**dadurch gekennzeichnet, dass**
die Abrollbahn (30, 40, 50, 60) und/oder die Kontaktrolle (31, 41, 51, 61) aus Kupfer-Chrom oder Kupfer-Beryllium besteht.

7. Windenergieanlage nach einem der vorhergehenden Ansprüche,
**dadurch gekennzeichnet, dass**
der Blitzübertrager (10, 11, 12, 16, 39) in einem Übergangsbereich der Nabe (3) zu einem Maschinenträger der Gondel (4) angeordnet ist.

8. Windenergieanlage nach einem der vorhergehenden Ansprüche,
**dadurch gekennzeichnet, dass**
die Kontaktrolle (31, 41, 51, 61,) an einer Schwenkführung angeordnet ist.

9. Windenergieanlage nach Anspruch 8,
**dadurch gekennzeichnet, dass**
die Schwenkführung einen Pendelarm (84, 85) aufweist, an dessen gegenüberliegenden Enden ein Schwenklager (S) und die Kontaktrolle (31, 41, 51, 61) angeordnet sind.

10. Windenergieanlage nach Anspruch 8 oder 9,
**dadurch gekennzeichnet, dass**
eine Tandemanordnung mit zwei gegenläufig orientierten Schwenkführungen für je eine Kontaktrolle (31, 41, 51, 61) vorgesehen ist.

11. Windenergieanlage nach einem der vorhergehenden Ansprüche,
**dadurch gekennzeichnet, dass**
die Kontaktrolle (31, 41, 51, 61) als Vollrolle ausgebildet ist.

12. Windenergieanlage nach einem der Ansprüche 1 bis 10,
**dadurch gekennzeichnet, dass**
die Kontaktrolle (31, 41, 51, 61) als geteilte Rolle mit Nabenstück (67) und auswechselbarem Radstück (68) ausgebildet ist.

13. Windenergieanlage nach Anspruch 12,
**dadurch gekennzeichnet, dass**
das auswechselbare Radstück (68) über Entkopplungselemente (66) an dem Nabenstück (67) angeordnet ist.

14. Windenergieanlage nach einem der vorhergehenden Ansprüche,
**dadurch gekennzeichnet, dass**
die Kontaktrolle (31, 41, 51, 61) einen gesonderten Laufgürtel (100) aufweist, der den Abrollbereich (63) überdeckt.

15. Windenergieanlage nach einem der Ansprüche 1 bis 14,
**dadurch gekennzeichnet, dass**
ein elektrisch isoliertes Wälzlager (42, 52) für die Kontaktrolle (31, 41, 51, 61) vorgesehen ist.

16. Windenergieanlage nach einem der vorhergehenden Ansprüche,
**dadurch gekennzeichnet, dass**
die Kontaktrolle (31, 41, 51, 61) durch ihr Eigengewicht gegen die Abrollbahn (30, 40, 50, 60) gedrückt ist.

17. Windenergieanlage nach einem der vorhergehenden Ansprüche,
**dadurch gekennzeichnet, dass**
die Kontaktrolle (31, 41, 51, 61) mittels Fremdkraftbeaufschlagung gegen die Abrollbahn (30, 40, 50, 60) gedrückt ist.

18. Windenergieanlage nach Anspruch 17,
**dadurch gekennzeichnet, dass**
als Andruckeinrichtung zur Fremdkraftbeaufschlagung eine Feder (36, 46, 56) vorgesehen ist.

19. Windenergieanlage nach Anspruch 17,
**dadurch gekennzeichnet, dass**
ein von der Feder gesondertes oder mit ihr kombiniertes Dämpfungselement (48) vorgesehen ist.

20. Windenergieanlage nach einem der vorhergehenden Ansprüche,
**dadurch gekennzeichnet, dass**
die Funkenstrecke (59) derart ausgebildet ist, dass ihre Luftstrecke unterhalb der Funkenstrecke einstellbar ist.

21. Windenergieanlage nach einem der vorhergehenden Ansprüche,
**dadurch gekennzeichnet, dass**
ein die Erdungsbürste (73) aufnehmender Bürstenhalter (74) gegenüber einem Lagergehäuse (69) der Kontaktrolle (61) elektrisch isoliert ist.

22. Windenergieanlage nach einem der vorhergehenden Ansprüche,
**dadurch gekennzeichnet, dass**
eine Tragstruktur (110) für die Abrollbahn (30, 40, 50, 60) mit an der Nabe (3) angeordnete Speichen (120) vorgesehen ist, wobei die Speichen (120) aus isolierendem Material bestehen.

23. Windenergieanlage nach einem der vorhergehenden Ansprüche,
**dadurch gekennzeichnet, dass**
die Abrollbahn (30, 40, 50, 60) über Entkopplungselemente an der Nabe (3) oder der Tragstruktur (110) befestigt ist.

## Claims

1. Wind energy installation having a tower (5) for mounting in a base (7) and having a nacelle (4) which is arranged thereon and on which a rotor having a hub (3) and rotor blades (2) is arranged such that it can rotate and drives a generator (8) which is arranged in the nacelle (4), wherein a lightning conductor installation is provided in order to dissipate electrical energy from a lightning strike into the base (7) whose lightning path leads from the rotor blades (2) and the hub (3) via the nacelle (4) to the tower (5), and has at least one lightning transmitter (10, 11, 12, 16, 39) for passing on between two components, which can move relative to one another, of the wind energy installation,
**characterized in that**
a rolling track (30, 40, 50, 60), which is connected to the lightning path, is provided on one side of the lightning transmitter (10, 11, 12, 16, 39), and a contact roller (31, 41, 51, 61) which rolls thereon and is electrically conductively connected to a sliding body (72) is provided on the other side of the lightning transmitter, which sliding body (72) makes electrically conductive contact with an earthing brush (73), which is encapsulated against environmental influences and is connected via a brush holder (74) to an earthing line (78).

2. Wind energy installation according to claim 1, **characterized in that** the lightning transmitter (10, 11, 12, 16, 39) has a spark gap (59), which is connected to an earthing line (80) and is directed at the rolling track (30, 40, 50, 60), at a contact track which runs parallel to the rolling track (30, 40, 50, 60), or at the contact roller (31, 41, 51, 61).

3. Wind energy installation according to claim 2, **characterized in that** the contact roller (31, 41, 51, 61) has a rolling area (63) which makes contact with the rolling track (30, 40, 50, 60), and an opposing contact area (64) for the spark gap (59).

4. Wind energy installation according to one of the preceding claims, **characterized in that** the rolling area (63) of the contact roller (31, 41, 51, 61) is spherical.

5. Wind energy installation according to one of the preceding claims, **characterized in that** the rolling track (30, 40, 50, 60) is composed of a material which has greater wear resistance than the material of the contact roller (31, 41, 51, 61).

6. Wind energy installation according to claim 5, **characterized in that** the rolling track (30, 40, 50, 60) and/or the contact roller (31, 41, 51, 61) consist/consists of copper-chromium or copper-beryllium.

7. Wind energy installation according to one of the preceding claims, **characterized in that** the lightning transmitter (10, 11, 12, 16, 39) is arranged in a junction area between the hub (3) and a machine mount for the nacelle (4).

8. Wind energy installation according to one of the preceding claims, **characterized in that** the contact roller (31, 41, 51, 61) is arranged on a pivoting guide.

9. Wind energy installation according to claim 8, **characterized in that** the pivoting guide has a pendulum arm (84, 85) at whose opposite ends a pivoting bearing (S) and the contact roller (31, 41, 51, 61) are arranged.

10. Wind energy installation according to claim 8 or 9, **characterized in that** a tandem arrangement is provided, having two pivoting guides which are oriented in opposite senses, for one contact roller (31, 41, 51, 61) in each case.

11. Wind energy installation according to one of the preceding claims, **characterized in that** the contact roller (31, 41, 51, 61) is in the form of a complete roller.

12. Wind energy installation according to one of claims 1 to 10, **characterized in that** the contact roller (31, 41, 51, 61) is in the form of a divided roller with a hub piece (67) and a replaceable wheel piece (68).

13. Wind energy installation according to claim 12, **characterized in that** the replaceable wheel piece (68) is arranged on the hub piece (67) via the decoupling elements (66).

14. Wind energy installation according to one of the preceding claims, **characterized in that** the contact roller (31, 41, 51, 61) has a separate running strap (100), which covers the rolling area (63).

15. Wind energy installation according to one of claims 1 to 14, **characterized in that** an electrical insulated roller bearing (42, 52) is provided for the contact roller (31, 41, 51, 61).

16. Wind energy installation according to one of the preceding claims, **characterized in that** the contact roller (31, 41, 51, 61) is pressed against the roller track (30, 40, 50, 60) by its own weight.

17. Wind energy installation according to one of the preceding claims, **characterized in that** the contact roller (31, 41, 51, 61) is pressed against the rolling track (30, 40, 50, 60) by the application of external force.

18. Wind energy installation according to claim 17, **characterized in that** a spring (36, 46, 56) is provided as the contact-pressure device for the application of external force.

19. Wind energy installation according to claim 17, **characterized in that** a damping element (48) is provided, which is separate from the spring or is combined with it.

20. Wind energy installation according to one of the preceding claims, **characterized in that** the spark gap (59) is designed such that its air gap under the spark gap can be adjusted.

21. Wind energy installation according to one of the preceding claims, **characterized in that** a brush holder (74) which holds the earthing brush (73) is electrically insulated from a bearing housing (69) of the contact roller (61).

22. Wind energy installation according to one of the preceding claims, **characterized in that** a supporting structure (110) is provided for the rolling track (30, 40, 50, 60), with spokes (120) which are arranged on the hub (3), with the spokes (120) being composed of insulating material.

23. Wind energy installation according to one of the preceding claims, **characterized in that** the rolling track (30, 40, 50, 60) is attached to the hub (3) or to the supporting structure (110) via decoupling elements.

## Revendications

1. Éolienne, comportant un mât (5), destiné à être fixé dans le sol (7), et une nacelle (4), qui est montée sur ledit mât et sur laquelle un rotor, avec un moyeu (3) et des pales (2), est monté rotatif et actionne un générateur (8) disposé dans la nacelle (4), sachant que pour dévier dans le sol (7) l'énergie électrique d'un éclair frappant l'éolienne, il est prévu un paratonnerre, dont le parcours de la foudre mène depuis les pales (2) et le moyeu (3) vers le mât (5) en passant par la nacelle (4) et qui comporte au moins un transmetteur de foudre (10, 11, 12, 16, 39) pour le transfert entre deux composants de l'éolienne, mobiles l'un par rapport à l'autre,
**caractérisée en ce que**
sur un côté du transmetteur de foudre (10, 11, 12, 16, 39) est prévue une voie de roulement (30, 40, 50, 60), qui est reliée au parcours de la foudre, et sur l'autre côté du transmetteur de foudre est prévu un galet de contact (31, 41, 51, 61), qui roule sur ladite voie de roulement et qui est relié de manière électroconductrice à un corps de frottement (72), qui est en contact électroconducteur avec une balai de mise à la terre (73), qui est encapsulé pour le protéger des influences ambiantes et est relié à un conducteur de descente (78) par l'intermédiaire d'un porte-balais (74).

2. Éolienne selon la revendication 1, **caractérisée en ce que** le transmetteur de foudre (10, 11, 12, 16, 39) comporte un éclateur (59), qui est relié au conducteur de descente (80) et qui est dirigé vers la voie de roulement (30, 40, 50, 60), vers une voie de contact parallèle à la voie de roulement (30, 40, 50, 60) ou vers le galet de contact (31, 41, 51, 61).

3. Éolienne selon la revendication 2, **caractérisée en ce que** le galet de contact (31, 41, 51, 61) comporte une zone de roulement (63), entrant en contact avec la voie de roulement (30, 40, 50, 60), et une zone de contact complémentaire (64) pour l'éclateur (59).

4. Éolienne selon l'une quelconque des revendications précédentes, **caractérisée en ce que** la zone de roulement (63) du galet de contact (31, 41, 51, 61) est bombée.

5. Éolienne selon l'une quelconque des revendications précédentes, **caractérisée en ce que** la voie de roulement (30, 40, 50, 60) est réalisée dans un matériau qui possède une résistance à l'usure supérieure à celle du matériau du galet de contact (31, 41, 51, 61).

6. Éolienne selon la revendication 5, **caractérisée en ce que** la voie de roulement (30, 40, 50, 60) et/ou le galet de contact (31, 41, 51, 61) sont réalisés en cuivre-chrome ou cuivre-béryllium.

7. Éolienne selon l'une quelconque des revendications précédentes, **caractérisée en ce que** le transmetteur de foudre (10, 11, 12, 16, 39) est disposé dans une zone de transition du moyeu (3) vers le support de moteur de la nacelle (4).

8. Éolienne selon l'une quelconque des revendications précédentes, **caractérisée en ce que** le galet de contact (31, 41, 51, 61) est disposé sur un guidage pivotant.

9. Éolienne selon la revendication 8, **caractérisée en ce que** le guidage pivotant comporte un bras oscillant (84, 85), sur les extrémités opposées duquel sont disposés un palier pivotant (S) et le galet de contact (31, 41, 51, 61).

10. Éolienne selon la revendication 8 ou 9, **caractérisée en ce qu'**il est prévu un système tandem avec deux guidages pivotants, orientés en sens opposé, pour respectivement un galet de contact (31, 41, 51, 61).

11. Éolienne selon l'une quelconque des revendications précédentes, **caractérisée en ce que** le galet de contact (31, 41, 51, 61) est réalisé sous la forme d'un galet plein.

12. Éolienne selon l'une quelconque des revendications 1 à 10, **caractérisée en ce que** le galet de contact (31, 41, 51, 61) est réalisé sous la forme d'un galet séparé avec une partie formant moyeu (67) et une partie formant roue (68) interchangeable.

13. Éolienne selon la revendication 12, **caractérisée en ce que** la partie formant roue (68) interchangeable est disposée sur la partie formant moyeu (67) par l'intermédiaire d'éléments de découplage (66).

14. Éolienne selon l'une quelconque des revendications précédentes, **caractérisée en ce que** le galet de contact (31, 41, 51, 61) comporte une ceinture de roulement (100) séparée, qui recouvre la zone de roulement (63).

15. Éolienne selon l'une quelconque des revendications 1 à 14, **caractérisée en ce qu'**il est prévu un palier à roulements (42, 52) avec isolation électrique pour le galet de contact (31, 41, 51, 61).

16. Éolienne selon l'une quelconque des revendications précédentes, **caractérisée en ce que** le galet de contact (31, 41, 51, 61) est poussé sous l'effet de son propre poids contre la voie de roulement (30, 40, 50, 60).

17. Éolienne selon l'une quelconque des revendications précédentes, **caractérisée en ce que** le galet de contact (31, 41, 51, 61) est poussé, sous l'effet d'une sollicitation d'une force extérieure, contre la voie de roulement (30, 40, 50, 60).

18. Éolienne selon la revendication 17, **caractérisée en ce qu'**un ressort (36, 46, 56) est prévu comme dispositif de pression pour générer la sollicitation par la force extérieure.

19. Éolienne selon la revendication 17, **caractérisée en ce qu'**il est prévu un élément d'amortissement (48), séparé du ressort ou combiné à celui-ci.

20. Éolienne selon l'une quelconque des revendications précédentes, **caractérisée en ce que** l'éclateur (59) est configuré de telle sorte que l'entrefer de celui-ci peut être réglé en dessous de la distance de décharge.

21. Éolienne selon l'une quelconque des revendications précédentes, **caractérisée en ce qu'**un porte-balai (74), recevant le balai de mise à la terre (73), est isolé électriquement par rapport à un boîtier de palier (69) du galet de contact (61).

22. Éolienne selon l'une quelconque des revendications précédentes, **caractérisée en ce qu'**il est prévu une structure porteuse (110) pour la voie de roulement (30, 40, 50, 60) avec des rayons (120) disposés sur le moyeu (3), lesdits rayons (120) étant réalisés dans un matériau isolant.

23. Éolienne selon l'une quelconque des revendications précédentes, **caractérisée en ce que** la voie de roulement (30, 40, 50, 60) est fixée par l'intermédiaire d'éléments de découplage sur le moyeu (3) ou sur la structure porteuse (110).
